# EUROPEAN PATENT SPECIFICATION

(11) **EP 0 566 553 B1**
(45) Date of publication and mention of the grant of the patent: **28.02.1996**
(21) Application number: 93850083.2
(22) Date of filing: 14.04.1993
(51) Int. Cl.: B65G 47/61, A47G 25/14, B65G 21/10

(54) **Clothes-hanger station for hanging up and removing clothes**
Kleiderbügelstation zum Aufhängen und Entfernen von Kleidern
Station pour cintres pour la suspension et l'enlèvement de vêtements

(30) Priority: 15.04.1992 SE 9201197
(43) Date of publication of application: 20.10.1993
(73) Proprietor: AB METRIC INTERCONVEYOR, S-501 06 Boras (SE)
(72) Inventor: Neugebauer, Karl, S-502 50 Boras (SE); Myöhänen, Veikko, S-633 50 Eskilstuna (SE)
(74) Representative: Kristiansen, Alf P.

(56) References cited:
- DE-A- 3 535 297
- GB-A- 2 243 816
- US-A- 3 961 699
- US-A- 4 424 966
- US-A- 4 953 469

## Description

### TECHNICAL FIELD:

The present invention relates to a clothes-hanger station according to the preamble of claim 1 for hanging up and removing clothes on hangers. Such hanger stations are included in, for instance, equipment for the treatment of clothes after having been washed in laundries.

### PRIOR ART:

In laundries and the like plants for the treatment of clothes it is usual that the clothes are hanged on hangers which themselves hang in transport rails of some kind and are brought forward by means of some kind of a driving means such as a chain from one working station to another. The clothes are usually hanged on the hangers at a hanger station after having been washed and dried. They are usually then in a hanged condition passing a finishing tunnel where they are smoothed out by means of humid air which is blown on or along the clothes whereupon they successively pass inspection stations, repair stations and the like until they are removed from the hangers and packed. The hangers are thereafter returned hanging in a rail to the hanger station. Before this station the return unit is usually shaped as a sloping chute so that the hangers are sliding down to a stop from where they in a ordered way are brought one by one into the hanger-station itself.

The hanger-stations are of different construction, but they all have that in common that the hangers come one by one to a predetermined point where they are locked and stopped whereupon a person hangs up the piece of clothing intended for further transport on the hanger and thereafter this hanger moves further in the above described way. The locking or squeezing of the hanger is brought about because the person who works at the hanging-up station shall be able to have both hands free and in such a way quickly and easily be able to hang up the piece of clothing on the hanger.

Hanger-stations corresponding to the preamble of claim 1 are known from, for example, DE-A-3 535 297 and US-A-3 961 699.

### TECHNICAL PROBLEM:

Most hanger-stations function relatively satisfactorily without any great technical problems. However people are of different lengths and some persons must therefore stretch the arms upwardly a substantial distance to hang up the clothes on the hangers whereas some persons having a taller length may get an inconvenient working position in that the hands must work at a too low level. To work in an inconvenient and stressing position can give rise to serious health problems and it is also a production diminishing factor. One has therefore hitherto tried to solve this problem by either raising or lowering the support on which the person stands or by raising or lowering the hanging-station itself. Both solutions, however, create new problems as it of course is inconvenient to stand on a pallet or the like which besides that must be available in different heights and it is neither any satisfactory solution to lower the hanger-station as then the hangers in the supply chute will slide down at a too high speed against the hanger-station and vice versa when this is lowered or raised too much. Some other supply of hangers must then be provided.

### THE SOLUTION:

By the present invention one has been able to solve the problem with the above mentioned hanger-stations and brought about an ergonometrically proper and practical hanger-station for hanging on or removing clothes on or from hangers comprising a chute for empty hangers, a feeding-out track for hanged on hangers and a connecting rail between the chute and the track having a holding arrangement for the hangers which hanger-station is characterized in that the connecting rail is divided and the holding arrangement and the parts are linked to this and suspended by links at the end and provided with a means for raising or lowering the holding device by decreasing or increasing the total length of the parts.

It is according to the invention preferable if one of the parts of the connecting rail consists of two in each other telescopically displaceable pieces.

The hanger-station according to the invention could as a means for decreasing or increasing the total length of the parts by telescopically moving the pieces of the rails relatively to each other have a linear actuator, preferably a ball screw.

The hanger-station could, according to the invention, be provided with an endless chain, cone belt or tooth belt which move the hangers forward in the arrangement.

It is further according to the invention preferable if the hangers are fed intermittently by means of electronically guided units.

### FIGURE DESCRIPTION:

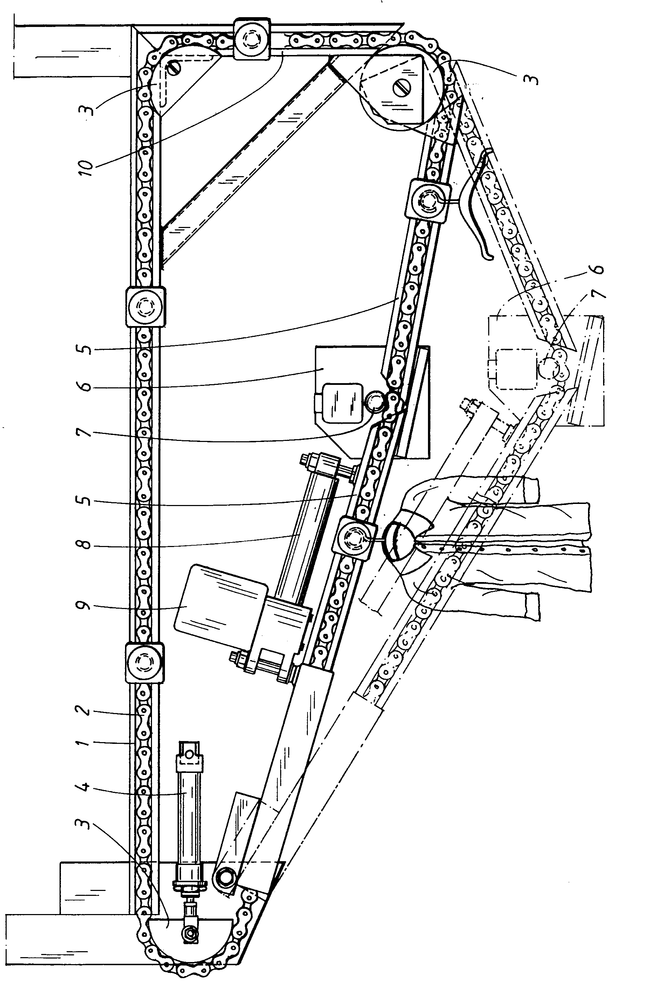

The invention will in the following be described more in detail in connection with the attached figure which shows the substantial parts of the hanger-station viewed from the position of the operator.

On the figure a frame 1 is shown which has been fastened to a support or the like and which carries the hanger-station. This frame 1 has a groove in which a chain 2 is driven forward by means of preferably an electrical motor. Instead of a chain one can for example use a cone belt or a cog belt. This motor and the driving forward is of a conventional kind and has therefore for the sake of simplicity been left out from the drawing. In the corners of the frame and at their ends a free wheel 3 has been arranged for a friction-free driving of the chain 2. At one end the frame is provided with a chain tensioner 4 of conventional kind. On the drawing a pneumatic cylinder has been shown as chain tensioner, but even other suitable devices can be used.

At the ends of the frame the connecting rail 5 has been swingably suspended. This rail 5 is, as appears from the figure, divided close to the middle part. At the dividing point the rails 5 have been hinged at a holding device 6 which is schematically shown. This holding device has the object to hold the hangers when they arrive at this point. The reason therefore is as mentioned above that the operator shall be able to have both arms free to be able to hang up the clothes on the hanger. The rails have also been hingeably suspended on the holding device around a central journal 7. The central journal 7 works also as a guide for the chain 2.

The left part of the rail 5, is as shown on the figure divided in two into each other telescopically arranged pieces, the outer of which is the one which is shown to the left and is suspended swingably at some part of the frame and the piece which is most to the right of these two pieces is hingeably suspended at the holding device 6. To be able to displace the two telescopic pieces of the rail 5 axially in relation to each other these two are connected to each end of a linear activator 8. This activator 8 consists preferably of a ball screw which can be driven by a motor 9.

When the ball screw is decreasing its length the inner piece of the rail 5 will then be moved into the outer piece and the whole total length of the rail 5 will then decrease. This means that the total length of the rail 5 will be less, and the rail will be more and more linear from the outer swinging points as the length is decreasing. At the opposite movement of the ball screw 8 the total length of the rail 5 will increase and the holding device 6 will then be lowered.

The hangers which are to be provided with clothes in the hanger-station will come along a sloping chute in towards the hanger-station at a point 10 on the frame 1. This feeding point for empty hangers can now be stationary and does not have to be changed in dependence of the length of the operator as the holding device 6 can be regulated in dependence of this length instead. This supply arrangement for empty hangers does not necessarily have to be a sloping chute. It can for example be an arrangement which comprises a driving chain or the like for the hangers.

Those hangers which have been provided with clothes leave to the left from the holding station and are hooked off from the hanging station by means of conventional means at a suitable distance from the holding device 6.

The supply of empty hangers and the feeding forward of empty and hanged hangers is conducted in an electronical way according to known methods. This is carried out in such a way that one hanger is moved to the holding device where it makes a stop during the hanging on of clothes and is thereafter moved further after a signal given from the operator.

On the drawing the hanger-station is shown with the holding device in its uppermost position and in its lowermost position. For the sake of simplicity the ball screw and the motor have been omitted from the drawing in the lowermost position.

The invention is not limited to the embodiment example shown and it can be modified in different ways within the scope of the claims. For example the chain tensioner, the activator and the holding device can be made differently without departing from the inventive idea.

## Claims

1. Clothes-hanger station for hanging up and removing clothes on and from hangers comprising a supply chute for empty hangers, a feeding-out track for hanged hangers and a connecting rail (5) between the chute and the track, the rail (5) having a holding device for the hangers, **characterized in** that the connecting rail (5) is divided at the holding device (6) and that the parts are hingeably connected to this and hingeably suspended at the ends and provided with a means (8) for raising or lowering the holding means device (6) by decreasing or increasing the total length of the parts.

2. Hanger-station according to claim 1, **characterized in** that one part of the connecting rail consists of two into each other telescopically displaceable pieces.

3. Hanger-station according to any of the claims 1 or 2, **characterized in** that the device for decreasing or increasing the total length of the parts by telescopically displacing the rail pieces (5) relative to each other consists of a linear activator, preferably a ball screw (8).

4. Hanger-station according to any of the claims 1 to 3, **characterized in** that the hangers are moved forward in the arrangement by means of an endless chain (2), cone belt or cog belt.

5. Hanger-station according to any of the claims 1 to 4, **characterized in** that the hangers are moved forward intermittently by means of electronically conducted units.

## Patentansprüche

1. Bekleidungshängstation zum Aufhängen und Abnehmen von Bekleidungsstücken auf und von Kleiderbügeln, bestehend aus einer Zuführrutsche für leere Kleiderbügel, einer Abgabebahn für aufgehängte Kleiderbügel und aus einer Verbindungsschiene (5) zwischen der Rutsche und der Bahn, wobei die Schiene (5) eine Halteeinrichtung für die Kleiderbügel aufweist, dadurch gekennzeichnet, daß die Verbindungsschiene (5) an der Halteeinrichtung (6) geteilt ist, und daß deren Abschnitte mit dieser schwenkbar verbunden und an den Enden schwenkbar aufgehängt sind und eine Einrichtung (8) zum Anheben oder Absenken der Halteeinrichtung (6) durch Verringern oder Vergrößern der Gesamtlänge der Abschnitte aufweist.

2. Hängstation nach Anspruch 1, dadurch gekennzeichnet, daß ein Abschnitt der Verbindungsschiene (5) aus zwei ineinander teleskopisch verschiebbaren Teilen besteht.

3. Hängstation nach einem der Ansprüche 1 oder 2, dadurch gekennzeichnet, daß die Einrichtung (8) zum Verringern oder Erhöhen der Gesamtlänge der Abschnitte mittels teleskopischer Verlagerung der Abschnitte der Schiene (5) relativ zueinander aus einem linearen Aktivator, vorzugsweise aus einer Kugelumlaufspindel (8), besteht.

4. Hängstation nach einem der Ansprüche 1 bis 3, dadurch gekennzeichnet, daß die Kleiderbügel in der Vorrichtung nach vorn mittels einer endlosen Kette (2), eines Keilriemens oder eines Zahnriemens bewegbar sind.

5. Hängstation nach einem der Ansprüche 1 bis 4, dadurch gekennzeichnet, daß die Kleiderbügel mittels elektronisch geführter Einheiten intermittierend vorwärts bewegbar sind.

## Revendications

1. Poste de suspension de vêtements destiné à la suspension et à l'extraction de vêtements sur des cintres, comprenant une goulotte d'alimentation en cintres vides, une voie d'évacuation de cintres suspendus et un rail de raccordement (5) placé entre la goulotte et la voie, le rail (5) comportant un dispositif de support des cintres, caractérisé en ce que le rail de raccordement (5) est divisé au niveau du dispositif de support (6), et ses parties sont raccordées de manière articulée à ce dispositif, sont suspendues de manière articulée aux extrémités et comportent un dispositif (8) de soulèvement et d'abaissement du dispositif de support (6), par réduction ou augmentation de la longueur totale de ses parties.

2. Poste de suspension selon la revendication 1, caractérisé en ce que la première partie du rail de raccordement comprend deux parties qui sont sous forme de pièces déplaçables télescopiquement l'une par rapport à l'autre.

3. Poste de suspension selon l'une des revendications 1 et 2, caractérisé en ce que le dispositif destiné à réduire et augmenter la longueur totale des parties par déplacement télescopique des pièces (5) du rail l'une par rapport à l'autre comprend un organe linéaire de commande, de préférence une vis à billes (8).

4. Poste de suspension selon l'une quelconque des revendications 1 à 3, caractérisé en ce que les cintres sont déplacés vers l'avant dans l'ensemble à l'aide d'une chaîne sans fin (2), d'une courroie conique ou d'une courroie crantée.

5. Poste de suspension selon l'une quelconque des revendications 1 à 4, caractérisé en ce que les cintres sont déplacés par intermittence vers l'avant par des unités commandées électroniquement.
